# FASCICULE DE BREVET EUROPEEN

(11) **EP 3 074 651 B1**
(45) Date de publication et mention de la délivrance du brevet: **10.04.2019**
(21) Numéro de dépôt: 13812011.8
(22) Date de dépôt: 29.11.2013
(51) Int. Cl.: F16C 33/38

(54) **CAGE DE ROULEMENT A CONTACT OBLIQUE ET ROULEMENT À BILLES COMPORTANT UNE TELLE CAGE**
WINKELKONTAKTWÄLZLAGERKÄFIG UND KUGELLAGER MIT SOLCH EINEM KÄFIG
ANGULAR-CONTACT ROLLING BEARING CAGE AND BALL BEARING COMPRISING SUCH A CAGE

(43) Date de publication de la demande: 05.10.2016
(73) Titulaire: NTN-SNR Roulements, 74010 Annecy (FR)
(72) Inventeur: BONNAUDET, Aurélien, F-74000 Annecy (FR); MAILLE, Renaud, Shninagawa-ku Tokyo-to 140-0004 (JP)
(74) Mandataire: Alatis
(86) Numéro de dépôt international: PCT/FR2013/052903
(87) Numéro de publication internationale: WO 2015/079125

(56) Documents cités:
- JP-A- 2004 052 785
- US-A- 5 906 441
- US-A1- 2007 116 395
- US-A1- 2007 206 893
- US-A1- 2012 237 151

## Description

### DOMAINE TECHNIQUE DE L'INVENTION

L'invention se rapporte à une cage pour roulement à billes à contact oblique et à un roulement comportant une telle cage, en particulier pour une boîte de transmission.

### ETAT DE LA TECHNIQUE ANTERIEURE

On connaît des roulements à billes à contact oblique équipés d'une cage en matériau thermoplastique pourvue d'alvéoles de maintien des billes. Ces alvéoles ont des facettes en forme de calotte sphérique de rayon légèrement plus important que celui des billes. Les rebords de ces facettes forment des ouvertures dont les dimensions, dictées par l'épaisseur de la cage, sont légèrement plus étroites que le diamètre des billes. Ainsi les billes peuvent-elles être insérées en force dans les alvéoles dont les rebords se déforment élastiquement lors de l'insertion, puis être retenues à l'intérieur des alvéoles.

En cas de défaut d'alignement entre les bagues du roulement, on constate une forte sollicitation de la cage, et notamment ses ponts séparant les alvéoles. Une zone de charge angulairement restreinte provoque des vitesses de déplacement des billes différentes, générant des efforts de traction / poussée sur les différents ponts de la cage.

Dans certains cas, ces efforts antagonistes peuvent mener à la rupture des ponts de cages.

On constate en pratique un frottement relativement élevé entre les billes et les facettes de la cage, qui induit un couple résistant s'opposant à la libre rotation du roulement. Ce frottement est d'autant plus important que les tolérances de fabrication au niveau des bagues peuvent conduire certaines des billes à sortir de leur trajectoire idéale du fait des dispersions de cotes. En particulier, les centres des billes ne sont pas nécessairement situés tous dans un même plan perpendiculaire à l'axe de rotation du roulement et certaines billes peuvent momentanément se rapprocher ou s'éloigner de l'axe de rotation du roulement. Des écarts par rapport à la trajectoire idéale peuvent également survenir du fait des jeux de montage et des sollicitations du roulement.

Pour diminuer ce frottement, il est naturellement possible d'augmenter le rayon des alvéoles pour un diamètre de bille donné. Toutefois, une telle augmentation impose d'épaissir la cage, pour conserver des rebords d'écartement plus faible que le diamètre des billes. Une telle augmentation n'est pas souhaitable car elle augmente le coût de revient de la cage, sa masse et son moment d'inertie.

Il a été proposé dans le document US 2007/116395, de prévoir une cage à alvéoles de forme elliptique allongée dans le sens circonférentiel, dans le but de laisser aux billes un jeu dans le sens circonférentiel. Mais les contacts entre la bille sphérique et l'alvéole elliptique sont situés toujours dans la même zone de l'alvéole, d'où un risque d'usure prématurée et de casse, notamment si la cage est en matériau thermoplastique. De plus, les alvéoles ne sont pas enveloppantes.

Il a par ailleurs été proposé dans le document DE 10 2010 047 962 de prévoir une cage à alvéoles de forme oblongue allongée dans le sens circonférentiel. Toutefois, les formes proposées ne sont pas suffisamment enveloppantes et ne permettent pas un maintien satisfaisant des billes dans les alvéoles.

Dans le document US2012237151 est décrit un roulement à billes à contact oblique à plusieurs rangées de billes, comportant une cage selon le préambule de la revendication 1.

### EXPOSE DE L'INVENTION

L'invention vise donc à remédier aux inconvénients de l'état de la technique, de manière à proposer une configuration de cage qui diminue sensiblement les risques de casse des ponts rencontrés en cas de défaut important d'alignement.

Selon un premier aspect de l'invention, celle-ci a trait à une cage de roulement à billes à contact oblique de forme généralement annulaire définissant un axe de référence, la cage comportant une pluralité d'alvéoles destinées à recevoir chacune une bille de rayon donné et séparées par des pontets, les alvéoles étant conformées de manière à retenir les billes dans les alvéoles, c'est-à-dire de manière que les billes ne puisse s'échapper des alvéoles sans déformer la cage, et notamment les pontets. La cage présente une hauteur H mesurée parallèlement à l'axe de référence, et les pontets présentent chacun une face intérieure tournée vers l'axe de référence, tangente à une enveloppe tronconique et de hauteur, mesurée parallèlement à l'axe de référence, strictement supérieure à la moitié de la hauteur de la cage, et de préférence supérieure ou égale à 2/3, et de préférence comprise entre 70% et 80 de la hauteur de la cage, par exemple de 75% de la hauteur de la cage.

Les pontets présentent chacun une face extérieure tournée à l'opposé de l'axe de référence, tangente à une enveloppe tronconique extérieure. L'enveloppe tronconique intérieure présente de préférence un angle au sommet inférieur à celui de l'enveloppe tronconique extérieure.

Ces caractéristiques dimensionnelles traduisent, pour une cage enveloppante destinée à emprisonner les billes dans les alvéoles sans leur laisser la possibilité de sortir même avant montage dans le roulement, un affinement de l'épaisseur des pontets, notamment à leur périphérie radiale intérieure. De manière surprenante, cette réduction d'épaisseur s'avère bénéfique pour éviter la casse des pontets. On explique a posteriori ce gain par le fait que lorsque les pontets présentent une épaisseur trop importante à leur périphérie radiale intérieure, les billes adjacentes viennent se coincer de part et d'autres des pontets, sollicitant ses derniers de manière accrues. En affinant les pontets, on évite une partie des sollicitations et l'on prolonge la durée de vie de la cage.

La cage est constituée d'une pièce en matière thermoplastique ayant une certaine élasticité, ce qui permet d'insérer les billes en force dans les alvéoles.

Au moins une des alvéoles comporte deux facettes concaves opposées constituant chacune une portion de calotte hémisphérique de rayon R présente un centre de courbure dont la distance à la facette opposée est supérieure à R, les centres des deux portions de calotte étant situés dans un même plan perpendiculaire à l'axe de référence, à distance l'un de l'autre, et à égale distance de l'axe de référence. Les deux portions de calottes hémisphériques sont reliées l'une à l'autre par deux facettes de raccordement situées sur une même enveloppe tubulaire cylindrique ou torique de rayon R.

En coupe dans un plan passant par les deux centres de l'alvéole, celle-ci a une forme oblongue (dans le cas d'une enveloppe tubulaire cylindrique) ou légèrement en haricot (dans le cas d'une enveloppe tubulaire torique). Un jeu circonférentiel fonctionnel est ainsi constitué pour les billes, jeu dont la mesure est sensiblement égale à la distance entre les deux centres de l'alvéole, et qui s'ajoute au jeu induit par la différence entre le rayon des billes et le rayon de courbure légèrement supérieur des calottes hémisphériques. Les centres des deux calottes sont à égale distance de l'axe de référence, ce qui permet un débattement dans le sens circonférentiel. En cas de défaut d'alignement des bagues du roulement générant sur les différentes billes dans une zone de charge angulairement restreinte des efforts antagonistes de traction / poussée importants et des vitesses de rotation différentes, le jeu circonférentiel permet d'éviter une sollicitation trop importante des ponts entre les alvéoles. En pratique, on constate que le problème de casse potentielle des ponts de la cage est résolu. Les deux facettes cylindriques déterminent quant à elles un jeu faible pour le positionnement des billes dans la direction perpendiculaire au cercle primitif du roulement, ce qui favorise le maintien des billes en position.

De préférence, la cage présente un grand anneau et un petit anneau, reliés par les pontets. Pour faciliter le moulage et le démoulage par mouvement relatif axial des pièces du moule, le grand anneau présente de préférence un diamètre intérieur plus grand que le diamètre extérieur du petit anneau.

De préférence, toutes les alvéoles sont de forme identique, ce qui permet un montage aisé sans contrainte de positionnement, les centres des alvéoles étant disposés dans un même plan de référence de la cage, perpendiculaire à l'axe de référence.

La cage peut être pourvue de languettes de positionnement destinées à coopérer avec une bague du roulement à billes, ce qui facilite l'assemblage et le stockage du roulement.

On peut avantageusement prévoir des nervures de renfort sur les pontets, nervures qui permettent une rigidification des pontets, sans affecter notablement la masse tournante.

La cage présente de préférence deux anneaux d'extrémités sur lesquels sont formées les facettes de raccordement, les deux anneaux d'extrémités étant reliés par les pontets.

Selon un deuxième aspect de l'invention, celle-ci a trait à un roulement à billes, comportant au moins deux chemins de roulement annulaires sur lesquels roulent des billes formant une ou plusieurs rangées de billes, ainsi qu'au moins une cage telle que précédemment décrite. On peut définir pour chaque rangée de billes un plan de référence contenant les trajectoires des centres des billes de la rangée considérée. La cage comporte au moins une rangée d'alvéoles dans lesquelles sont logées les billes d'une même rangée de billes. Les centres des calottes des alvéoles d'une même rangée sont situés dans le plan de référence de la rangée de billes. Ceci permet notamment d'accommoder les déplacements des billes en direction circonférentielle. Les billes logées dans les alvéoles ont un diamètre légèrement inférieur à 2R. Le jeu dans le sens radial et/ou axial est uniquement défini par la différence entre le rayon de courbure R des facettes de raccordement et le rayon des billes, alors que le jeu dans le sens circonférentiel comprend en outre le jeu supplémentaire défini par la distance entre les centre de courbure des calottes hémisphériques. Les alvéoles sont conformées de manière à emprisonner les billes.

Selon un mode de réalisation, le roulement est à contact oblique, les points de contacts des billes avec les deux chemins de roulement étant répartis sur un cône de contact. C'est en pratique dans cette configuration que les problèmes les plus aigus de casse des pontets étaient rencontrés avec des alvéoles sphériques.

Suivant un mode de réalisation, la cage comporte des languettes de positionnement venant s'insérer dans une gorge annulaire d'une bague formant l'un des chemins de roulement.

### BREVE DESCRIPTION DES FIGURES

D'autres avantages et caractéristiques ressortiront plus clairement de la description qui va suivre d'un mode particulier de réalisation de l'invention, donnés à titre d'exemples non limitatifs, et représentés aux dessins annexés sur lesquels :
- la figure 1 représente, en perspective partiellement coupée, un roulement à billes à contact selon un mode de réalisation de l'invention ;
- la figure 2 représente une vue en perspective de la cage de roulement utilisée dans la figure 1 ;
- la figure 3 représente en coupe axiale la cage de la figure 2 ; et
- la figure 4 représente un détail d'une alvéole de la cage de la figure 2;
- la figure 5 représente une coupe axiale d'une cage selon un deuxième mode de réalisation de l'invention, en alternative à la cage de la figure 2, pour un roulement selon la figure 1;
- la figure 6 représente une autre coupe axiale de la cage de la figure 5.

Pour plus de clarté, les éléments identiques sont repérés par des signes de référence identiques sur l'ensemble des figures.

### DESCRIPTION DETAILLEE D'UN MODE DE REALISATION

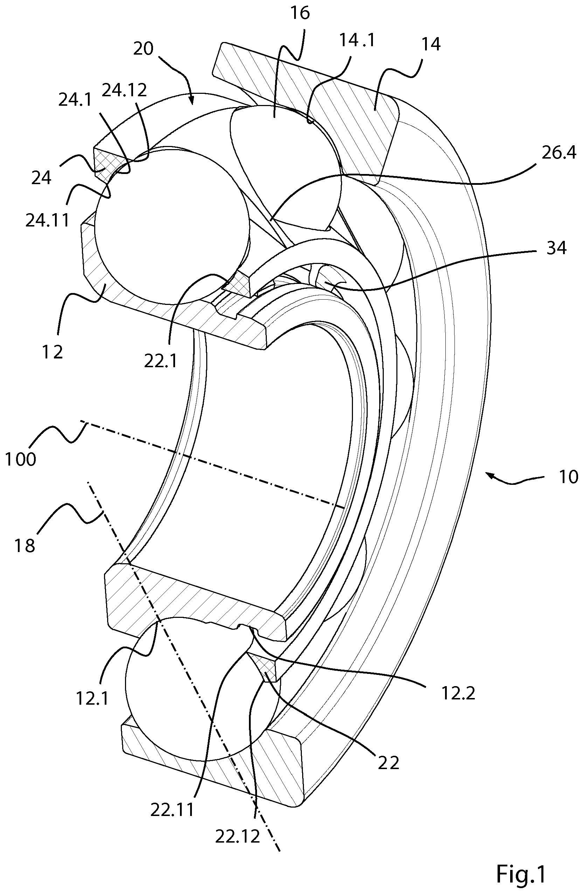

En référence à la figure 1, un roulement à billes à contact oblique **10** est constitué d'une bague intérieure **12** et d'une bague extérieure **14,** formant des chemins de roulement **12.1, 14.1** à contact oblique pour des billes **16.** La géométrie des chemins de roulement est telle qu'à vide, chaque bille **16** est en contact avec les chemins de roulement par deux points situés sur une ligne de contact **18,** les lignes de contact des différentes billes générant un cône de contact unique.

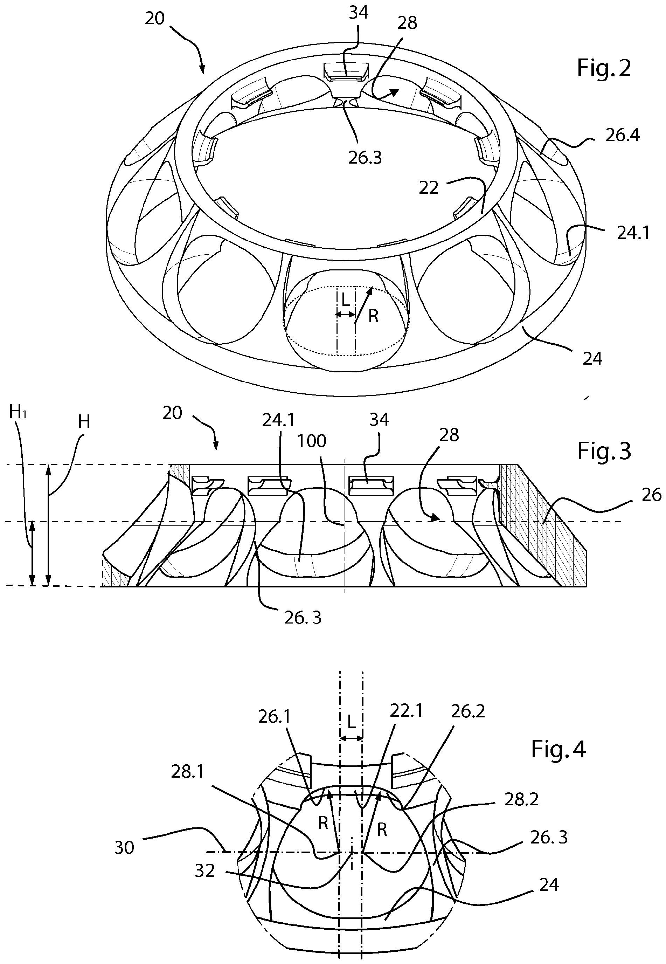

Une cage annulaire **20** assure par ailleurs le maintien et le positionnement relatif des billes **16** dans le roulement. La cage **20,** visible en détail sur les figures 2 à 4, est constituée de préférence d'une pièce unique en matériau thermoplastique, par exemple en polyamide, formant un anneau intérieur **22,** un anneau extérieur **24** et des pontets **26** délimitant des alvéoles **28** logeant chacune une bille **16** du roulement. La cage définit un axe géométrique de référence **100** qui est également **l**'axe de rotation idéal du roulement, en cas d'alignement parfait des bagues intérieure **12** et extérieure **14.**

Chaque alvéole **28,** délimitée par deux pontets **26,** présente deux facettes concaves **26.1, 26.2** formées chacune dans un pontet **26** et se faisant face dans le sens circonférentiel, reliées par des facettes **22.1, 24.1** de raccordement formées dans les anneaux intérieur **22** et extérieur **24.** Chacune des facettes concaves **26.1, 26.2** est une portion de calotte hémisphérique, les deux facettes ayant un même rayon de courbure **R** mais des centres de courbures **28.1, 28.2** distants **l**'un de **l**'autre d'une distance **L,** de sorte que le centre **28.1, 28.2** de chaque facette hémisphérique **26.1, 26.2** est situé à une distance de la facette hémisphérique opposée **26.2, 26.1** supérieure au rayon de courbure **R.** Les centres **28.1, 28.2** sont situés sur un axe géométrique **30** qui se trouve dans un plan perpendiculaire à **l**'axe de référence **100.** Les centres **28.1, 28.2** sont situés à égale distance de **l**'axe de référence **100,** de sorte que la perpendiculaire à **l**'axe géométrique **30** coupant **l**'axe géométrique de référence **100** passe par le milieu **32** des deux centres **28.1, 28.2.**

Les facettes de raccordement **22.1, 24.1,** constituent des portions d'un même cylindre de rayon **R** dont **l**'axe est **l**'axe **30** passant par les centres **28.1, 28.2.** Ce cylindre se raccorde de part et d'autre sur les deux calottes hémisphériques **26.1, 26.2** sans former de singularité géométrique.

Sur les figures, la distance **L** a volontairement été accentuées de façon à rendre visibles les caractéristiques géométriques des alvéoles, En pratique toutefois, la distance **L** entre les deux centres **28.1, 28.2** est très faible, inférieure à 10%, et de préférence inférieure à 1%, du rayon de courbure **R.**

Un jeu circonférentiel est constitué pour les billes **16,** correspondant à la distance **L** entre les centres **28.1, 28.2** dans le plan du cercle primitif, ce qui permet aux billes **16** logées dans les alvéoles **28** de se positionner librement en fonction de la charge du roulement et des tolérances de fabrication. Dans la direction de l'axe **100** au contraire, le jeu admis reste très faible et est défini uniquement par la faible différence entre le diamètre des billes **16** et le diamètre 2R du cylindre dans lequel sont inscrites les facettes **22.1, 24.1.**

Cette disposition permet de diminuer considérablement les efforts appliqués par les billes **16** sur les pontets **26,** notamment lorsque la charge appliquée au roulement est fortement dissymétrique et que les axes de rotation de la bague intérieure **22** et de la bague extérieure **24** ne sont pas confondus.

Chaque facette cylindrique **22.1, 24.1** présente un rebord intérieur **22.11, 24.11** tourné vers la bague intérieure **12** et proche de l'axe de référence **100,** et un rebord extérieur **22.12, 24.12** tourné vers la bague extérieure **14** et plus éloigné de **l**'axe de référence **100.** la distance entre les rebords intérieur **22.11,** resp. **24.11** et extérieur **22.12,** respectivement **24.12** de chaque facette **22.1,** respectivement **24.1** est déterminante pour garantir une bonne tenue des billes **16** dans les alvéoles. En pratique, on fait en sorte que la distance entre un point quelconque d'un des deux rebords intérieurs **22.11** et un point quelconque de **l**'autre rebord intérieur **24.11** soit toujours inférieure au diamètre des billes, de même que la distance entre un point quelconque de l'un des deux rebords extérieur **22.12** et un point quelconque de l'autre rebord extérieur **24.12.** Des règles analogues sont appliquées au niveau de chacune des facettes **26.1, 26.2,** de manière à ce que l'alvéole **28** soit suffisamment enveloppante pour que les billes **16** ne puissent s'échapper. L'insertion des billes **16** est faite en force, par déformation élastique des anneaux **22, 24.**

La cage comporte en outre des nervures de renfort **26.3, 26.4** au niveau des pontets **26.** Elle peut être également pourvue de languettes **34** venant s'insérer dans une gorge annulaire **12.2** de la bague intérieure pour le positionnement de cage **20** sur la bague intérieure **12.**

Les pontets présentent des faces intérieures se situant sur un même cône, et présentant une hauteur H₁, mesurée parallèlement à l'axe 100, qui est strictement supérieure à 50% de la hauteur H de la cage.

Naturellement, diverses modifications sont possibles sans sortir du cadre de l'invention telle que revendiquée.

On a souligné que la distance **L** est faible par rapport au rayon **R,** de sorte que le rapport **L/R** est inférieur à 0,1, de préférence inférieur à 0,01. De ce fait, la forme de l'alvéole **28,** constituée par les deux calottes sphériques **26.1, 26.2** reliées par un tronçon cylindrique de longueur **L** formé par les facettes **22.1, 24.1,** est quasiment confondu avec une forme qui serait constituée par deux calottes sphériques reliées par un tronçon torique. La variante à tronçon torique est également envisageable. Dans ce cas, l'arc de cercle centré sur l'axe de référence **100** et passant par les centres de courbure **28.1, 28.2** des portions de calottes hémisphériques **26.1, 26.2** est situé sur le cercle primitif du roulement.

Le principe décrit ici pour un roulement à contact oblique est également applicable à un roulement à contact radial ou axial.

Le roulement peut être à plusieurs rangées de billes, avec une cage par rangée de billes, ou une cage à plusieurs rangées d'alvéoles correspondant chacune à une rangée de billes.

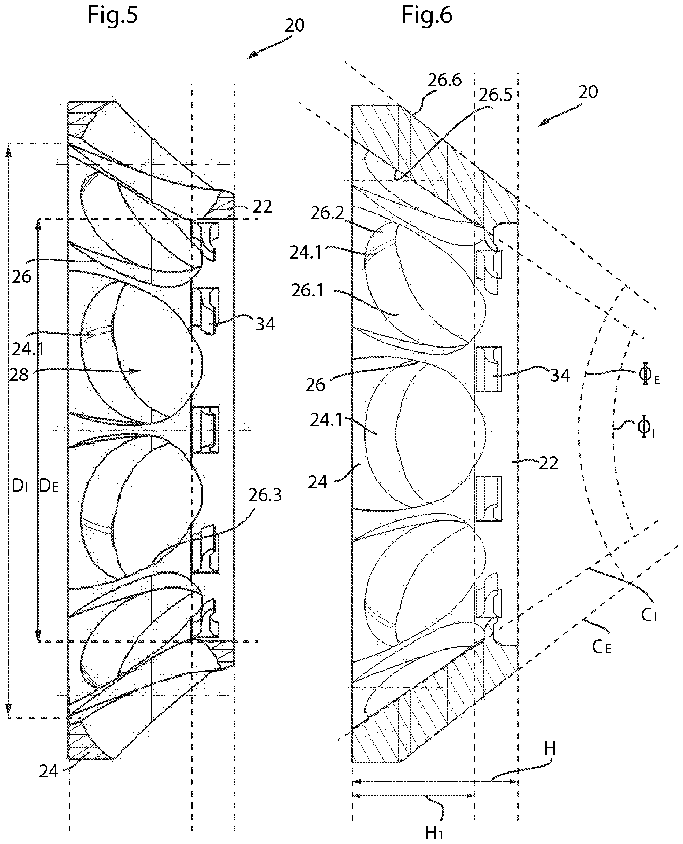

On a illustré sur les figures 5 et 6 une variante de la cage de la figure 2, pouvant venir en remplacement de cette dernière dans le roulement de la figure 1. La cage est constituée de préférence d'une pièce unique en matériau thermoplastique, par exemple en polyamide, formant un anneau intérieur **22,** un anneau extérieur **24** et des pontets **26** délimitant des alvéoles **28** logeant chacune une bille **16** du roulement. La cage définit un axe géométrique de référence **100** qui est également **l**'axe de rotation idéal du roulement, en cas d'alignement parfait des bagues intérieure **12** et extérieure **14.** Les alvéoles ont des formes identiques aux formes illustrées sur les figures 3 et 4, et présentent notamment chacune deux facettes concaves **26.1, 26.2** formées chacune dans un pontet **26** et se faisant face dans le sens circonférentiel, reliées par des facettes **22.1, 24.1** de raccordement formées dans les anneaux intérieur **22** et extérieur **24.** Chacune des facettes concaves **26.1, 26.2** est une portion de calotte hémisphérique, les deux facettes ayant un même rayon de courbure **R** mais des centres de courbures **28.1, 28.2** distants l'un de l'autre d'une distance **L,** de sorte que le centre **28.1, 28.2** de chaque facette hémisphérique **26.1, 26.2** est situé à une distance de la facette hémisphérique opposée **26.2, 26.1** supérieure au rayon de courbure **R.**

La cage des figures **5** et **6** se distingue de la cage des figures **2** à **4** par le profil des pontets. Chacun des pontets présente une face intérieure **26.5** tournée radialement vers l'axe de rotation **100** et une face extérieure **26.6** tournée radialement à l'opposé de l'axe de rotation **100.** On a tracé sur la figure **6** un cône **C_{I}** constituant une enveloppe pour les faces intérieures **26.5** et un cône **C_{E}** constituant une enveloppe pour les faces extérieures **26.6.** On constate que les pontets présentent chacun une face extérieure tournée à l'opposé de l'axe de référence, tangente à une enveloppe tronconique extérieure, l'enveloppe conique intérieure présentant de préférence un angle au sommet **Φ_{I}** inférieur à celui **Φ_{E}** de l'enveloppe conique extérieure. Par ailleurs, la hauteur H₁ des faces intérieures **26.5** est supérieure aux 2/3 de la hauteur totale H de la cage, et dans l'illustration égale à 75% de la hauteur H, ce qui n'était pas le cas dans le premier mode de réalisation de l'invention. On a donc choisi délibérément de réduire l'épaisseur des pontets **26.** De manière surprenante, cette réduction d'épaisseur s'avère bénéfique pour éviter la casse des pontets. On explique a posteriori ce gain par le fait que lorsque les pontets présentent un épaisseur trop importante à leur périphérie radiale intérieure, les billes adjacentes viennent se coincer de part et d'autres des pontets, sollicitant ses derniers de manière accrues. En affinant les pontets, on évite une partie des sollicitations et l'on prolonge la durée de vie de la cage **20.**

Comme on le voit sur la figure 5, on fait en sorte que l'anneau intérieur **22** ait un diamètre extérieur **D_{E}** plus petit que le diamètre intérieur **D_{I}** de la bague extérieure **24.** Ceci permet de mouler la cage **20** dans un moule dont les pièces ont un mouvement axial parallèle à l'axe **100,** sans tiroirs latéraux.

## Revendications

1. Cage de roulement à billes à contact oblique constituée d'une pièce en matière thermoplastique de forme généralement annulaire définissant un axe de référence (100), la cage comportant une pluralité d'alvéoles (28) destinées à recevoir chacune une bille (16) de rayon donné et séparées par des pontets (26), les alvéoles (28) étant conformées de manière à retenir les billes (16) dans les alvéoles (28), la cage (10) présentant une hauteur H mesurée parallèlement à l'axe de référence (100), les pontets (26) présentant chacun une face radiale intérieure tournée vers l'axe de référence (100), tangente à une enveloppe tronconique intérieure et de hauteur H₁, mesurée parallèlement à l'axe de référence, strictement supérieure à la moitié de la hauteur de la cage H, les pontets présentant chacun une face extérieure tournée à l'opposé de l'axe de référence, tangente à une enveloppe tronconique extérieure, **caractérisée en ce que** l'enveloppe tronconique intérieure présente un angle au sommet **Φ**_{I} inférieur à un angle au sommet **Φ**_{E} de l'enveloppe tronconique extérieure, et **en ce qu'**au moins une des alvéoles (28) comporte deux facettes concaves opposées (26.1, 26.2), chacune des deux facettes étant formée sur l'un des pontets (26) et constituant une portion de calotte hémisphérique de rayon R présentant un centre de courbure (28.1, 28.2) dont la distance à la facette opposée est supérieure à R, les centres (28.1, 28.2) des deux portions de calotte étant situés dans un même plan perpendiculaire à l'axe de référence (100), à distance l'un de l'autre, et à égale distance de l'axe de référence (100), les deux portions de calottes hémisphériques étant reliées l'une à l'autre par deux facettes (22.1, 24.1) de raccordement situées sur une même enveloppe tubulaire cylindrique ou torique de rayon R.

2. Cage selon la revendication 1, **caractérisée en ce que** la hauteur H₁ est supérieure à 2/3 de la hauteur H, et de préférence comprise entre 70% et 80% de la hauteur H.

3. Cage selon l'une quelconque des revendications précédentes, **caractérisée en ce qu'**elle présente un grand anneau et un petit anneaux, reliés par les pontets.

4. Cage selon la revendication 3, **caractérisée en ce que** le grand anneau présente un diamètre intérieur D_{I} et le petit anneau présente un diamètre extérieur D_{E} inférieur au diamètre intérieur du grand anneau.

5. Cage selon l'une quelconque des revendications précédentes, **caractérisée en ce que** toutes les alvéoles (28) sont de forme identique.

6. Cage selon l'une quelconque des revendications précédentes, **caractérisée en ce que** la cage (20) comporte des languettes de positionnement (34).

7. Cage selon l'une quelconque des revendications précédentes, **caractérisée en ce que** les pontets (26) sont pourvus chacun d'au moins une nervure de renfort (26.3, 26.4).

8. Cage selon l'une quelconque des revendications précédentes, **caractérisée en ce que** la cage (20) présente deux anneaux d'extrémités (22, 24) sur lesquels sont formées les facettes de raccordement (22.1, 24.1), les deux anneaux d'extrémités étant reliés par les pontets (26).

9. Roulement à billes (10) comportant au moins deux chemins de roulement (12.1, 14.1) annulaires sur lesquels roulent des billes (16) formant au moins une rangée de billes, les billes d'une même rangée de billes ayant leurs centres situés dans un même plan de référence de la rangée de billes, **caractérisé en ce que** le roulement comprend au moins une cage (20) selon l'une quelconque des revendications précédentes, la cage (20) comportant au moins une rangée d'alvéoles (28) dans lesquelles sont logées les billes (16) de la rangée de billes, et dont les centres (28.1, 28.2) sont disposés dans le plan de référence de la rangée de billes.

10. Roulement à billes selon la revendication 9, **caractérisé en ce que** le roulement est à contact oblique, les points de contacts des billes (16) avec les deux chemins de roulement (12.1, 14.1) étant répartis sur un cône de contact.

11. Roulement à billes selon l'une quelconque des revendications 9 à 10, **caractérisé en ce que** les alvéoles (28) sont dimensionnées de façon à emprisonner les billes (16).

12. Roulement à billes selon l'une quelconque des revendications 9 à 11, **caractérisée en ce que** la cage (20) comporte des languettes de positionnement (34) venant s'insérer dans une gorge annulaire (12.2) d'une bague (12) formant l'un des chemins de roulement (12.1).

## Patentansprüche

1. Schrägkugellagerkäfig bestehend aus einem Stück aus einem allgemein ringförmig ausgebildeten thermoplastischen Material, welches eine Bezugsachse (100) abgrenzt, wobei der Käfig eine Vielzahl an Zellen (28) zur Aufnahme von jeweils einer Kugel (16) mit einem bestimmten Radius umfasst, die durch Stege (26) getrennt sind, wobei die Zellen (28) so gestaltet sind, dass sie die Kugeln (16) in den Zellen (28) zurück halten können, wobei der Käfig (10) eine parallel zur Bezugsachse (100) gemessene Höhe H aufweist, wobei die Stege (26) jeweils eine radiale, zur Bezugsachse (100) gedrehte Innenseite tangential zu einem konusförmigen Innenmantel mit einer parallel zur Bezugsachse gemessenen Höhe H1, die zwingend größer als die Hälfte der Höhe H des Käfigs ist, aufweisen, wobei die Stege jeweils eine Außenseite aufweisen, die zur entgegengesetzten Seite der Bezugsachse tangential zu einem konusförmigen Außenmantel gedreht ist, **dadurch gekennzeichnet, dass** der konusförmige Innenmantel einen Winkel am Scheitelpunkt Φ kleiner einem Winkel am Scheitelpunkt Φ_{E} des kegelstumpfförmigen Außenmantels aufweist und dadurch, dass mindestens eine der Zellen (28) zwei einander gegenüberliegende konkave Flächen (26.1, 26.2) aufweist, wobei jede der beiden Flächen auf einem der Stege (26) geformt ist und einen halbkugelförmigen Kalottenabschnitt mit dem Radius R mit einem Krümmungsmittelpunkt (28.1, 28.2) bildet, dessen Entfernung zur gegenüberliegenden Fläche größer R ist, wobei die Mittelpunkte (28.1, 28.2) der beiden Kalottenabschnitte auf ein und derselben Ebene senkrecht zur Bezugsachse (100) zueinander beabstandet und in gleicher Entfernung zur Bezugsachse (100) liegen, wobei die beiden halbkugelförmigen Kalottenabschnitte durch zwei Verbindungsflächen (22.1, 24.1), die sich auf ein und derselben röhrenförmigen, zylindrischen oder ringförmigen Umhüllung mit dem Radius R befinden, miteinander verbunden sind.

2. Käfig nach Anspruch 1, **dadurch gekennzeichnet, dass** die Höhe H₁ größer als 2/3 der Höhe H ist, und vorzugsweise 70 % bis 80 % der Höhe H beträgt.

3. Käfig nach einem der vorhergehenden Ansprüche, **dadurch gekennzeichnet, dass** er einen großen Ring und einen kleinen Ring aufweist, die durch Stege miteinander verbunden sind.

4. Käfig nach Anspruch 3, **dadurch gekennzeichnet, dass** der große Ring einen Innendurchmesser D_{I} und der kleine Ring einen Außendurchmesser D_{E} aufweist, der größer als der Innendurchmesser des großen Rings ist.

5. Käfig nach einem der vorhergehenden Ansprüche, **dadurch gekennzeichnet, dass** alle Zellen (28) eine identische Form haben.

6. Käfig nach einem der vorhergehenden Ansprüche, **dadurch gekennzeichnet, dass** der Käfig (20) Positionierungslaschen (34) umfasst.

7. Käfig nach einem der vorhergehenden Ansprüche, **dadurch gekennzeichnet, dass** die Stege (26) jeweils mit mindestens einer Verstärkungsrippe (26.3, 26.4) versehen sind.

8. Käfig nach einem der vorhergehenden Ansprüche, **dadurch gekennzeichnet, dass** der Käfig (20) zwei Endringe (22, 24) aufweist, an denen die Verbindungsflächen (22.1,24.1) ausgeformt sind, wobei die beiden Endringe durch Stege (26) miteinander verbunden sind.

9. Kugellager (10), das mindestens zwei ringförmige Laufbahnen (12.1, 14.1) aufweist, auf denen die mindestens eine Kugelreihe bildenden Kugeln (16) laufen, wobei die Kugeln ein und derselben Kugelreihe ihre Mittelpunkte auf ein und derselben Bezugsebene der Kugelreihe haben, **dadurch gekennzeichnet, dass** das Lager mindestens einen Käfig (20) nach einem der vorhergehenden Ansprüche umfasst, wobei der Käfig (20) mindestens eine Reihe Zellen (28) umfasst, in der die Kugeln (16) der Kugelreihe gelagert sind, und deren Mittelpunkte (28.1, 28.2) in der Bezugsebene der Kugelreihe angeordnet sind.

10. Kugellager nach Anspruch 9, **dadurch gekennzeichnet, dass** es sich um ein Schrägkugellager handelt, wobei die Berührungspunkte der Kugeln (16) mit den beiden Laufbahnen (12.1,14.1) auf einen Kontaktkonus verteilt sind.

11. Kugellager nach einem der Ansprüche 9 bis 10, **dadurch gekennzeichnet, dass** die Zellen (28) so bemessen sind, dass die Kugeln (16) eingeschlossen sind.

12. Kugellager nach einem der Ansprüche 9 bis 11, **dadurch gekennzeichnet, dass** der Käfig (20) Positionierungslaschen (34) umfasst, die sich in die ringförmige Nut (12.2) eines Rings (12), der eine der Laufbahnen (12.1) bildet, schieben.

## Claims

1. Angular contact ball bearing cage consisting of a thermoplastic material component of a generally annular shape defining a reference axis (100), wherein the cage comprises a plurality of cavities (28), each designed to receive a ball (16) of a given radius and separated by bridges (26), with the cavities (28) being configured so as to retain the balls (16) in the cavities (28), the cage (10) having a height H measured parallel to the reference axis (100), the bridges (26) each having an inner radial face facing towards the reference axis (100), tangent to an inner truncated envelope of a height H₁, measured parallel to the reference axis, strictly greater than half the height of the cage H, with the bridges each having an outer face facing away from the reference axis, tangent to an outer truncated envelope, **characterised in that** the inner truncated envelope has an angle at the top φ_{I} smaller than an angle at the top φ_{E} of the outer truncated envelope, and **in that** at least one of the cavities (28) comprises two opposite concave flats (26.1, 26.2), with each of the two flats being formed on one of the bridges (26) and forming a hemispheric crown portion of a radius R having a centre of curvature (28.1, 28.2), the distance to the opposite flat of which is greater than R, with the centres (28.1, 28.2) of the two crown portions being located in a same plane perpendicular to the reference axis (100), spaced apart from each other, and at equal distance from the reference axis (100), with the two hemispheric crown portions being connected to each other by two connecting flats (22.1, 24.1) located on a same cylindrical tubular or toric envelope of a radius R.

2. Cage according to claim 1, **characterised in that** the height H₁ is more than 2/3 of the height H, and is preferably between 70% and 80% of the height H.

3. Cage according to any one of the preceding claims, **characterised in that** it features a large ring and a small ring, connected by bridges.

4. Cage according to claim 3, **characterised in that** the large ring has an inner diameter D1 and the small ring has an outer diameter DE less than the inner diameter of the large ring.

5. Cage according to any one of the preceding claims, **characterised in that** all the cavities (28) are of identical shape.

6. Cage according to any one of the preceding claims, **characterised in that** the cage (20) comprises positioning tabs (34).

7. Cage according to any one of the preceding claims, **characterised in that** the bridges (26) are each equipped with at least one reinforcing rib (26.3, 26.4).

8. Cage according to any one of the preceding claims, **characterised in that** the cage (20) has two end rings (22, 24) on which the connecting flats (22.1, 24.1) are formed, with the two end rings being linked by bridges (26).

9. Ball bearing (10) comprising at least two annular bearing races (12.1, 14.1) on which the balls (16) travel, forming at least one row of balls, wherein the balls of a same row of balls have their centres located in a same reference plane of the row of balls, **characterised in that** the bearing comprises at least one cage (20) according to any one of the preceding claims, with the cage (20) comprising at least one row of cavities (28) in which the balls (16) of the row of balls are accommodated and of which the centres (12.1, 14.1) are arranged in the reference plane of the row of balls.

10. Ball bearing according to claim 9, **characterised in that** the bearing is of the angular contact type, wherein the contact points of the balls (16) with the two bearing races (12.1, 14.1) are distributed on a contact cone.

11. Ball bearing according to any one of claims 9 to 10, **characterised in that** the cavities (28) are dimensioned so as to entrap the balls (16).

12. Ball bearing according to any one of claims 9 to 11, **characterised in that** the cage (20) comprises positioning tabs (34), which are inserted in an annular groove (12.2) of a ring (12) forming one of the bearing races (12.1).
